# EUROPEAN PATENT APPLICATION

(11) **EP 4 588 893 A1**
(43) Date of publication of application: **23.07.2025**
(21) Application number: 24863828.0
(22) Date of filing: 29.03.2024
(51) Int. Cl.: C01D 15/02, C01D 1/28, B01D 15/38

(54) **METHOD FOR MANUFACTURING LITHIUM HYDROXIDE**

(30) Priority: 30.10.2023 KR 20230146985
(71) Applicant: Korea Zinc Co., Ltd., Seoul 03159 (KR); Kemco, Seoul 03159 (KR)
(72) Inventor: LEE, Je Joong, Seoul 06041 (KR); CHOI, Heon Sik, Ulsan 44696 (KR); LEE, Hyun, Ulsan 44650 (KR)
(74) Representative: Angerhausen, Christoph
(86) International application number: PCT/KR2024/004029
(87) International publication number: WO 2025/095237

(57) **Abstract**

The present invention relates to a method for manufacturing lithium hydroxide. Specifically, according to an embodiment of the present invention, a method for manufacturing lithium hydroxide comprises: a solution preparation step of preparing a lithium hydroxide solution containing impurities and lithium ions; a binding acid solution passage step of passing a binding acid solution through the chelate resin to allow hydrogen ions to bind to the chelate resin; a distilled water passage step of passing distilled water through the chelate resin to remove remaining binding acid solution from the chelate resin; a lithium hydroxide solution passage step of passing the lithium hydroxide solution through a chelate resin to allow ions contained in the impurities to bind to the chelate resin; and a separating acid solution passage step of passing a separating acid solution through the impurity-bound chelate resin to detach the impurities bound to the chelate from the chelate resin.

## Description

### TECHNICAL FIELD

The present disclosure relates to a method for manufacturing lithium hydroxide.

### BACKGROUND

Recently, with the growing importance of environmentally friendly transportation means such as electric vehicles, the demand for lithium secondary batteries, which are used as the main energy storage devices in electric vehicles, has been increasing. Lithium is a core material of the cathode material that determines the battery capacity and voltage of lithium secondary batteries, and because lithium is difficult to utilize in its pure form, lithium is processed and used as a compound.

Lithium compounds used in the manufacture of lithium secondary batteries mainly include lithium carbonate (Li₂CO₃) and lithium hydroxide (LiOH). Among them, lithium hydroxide is mainly used in the cathode material of lithium secondary batteries for electric vehicles, which require high density and high capacity, because it is easily synthesized with nickel, which increases the battery capacity. Therefore, the development of technologies to effectively and economically obtain lithium hydroxide is required.

Generally, examples of methods to obtain lithium hydroxide include methods of extracting lithium hydroxide from mined lithium ore, producing lithium carbonate first by evaporating brine extracted from salt lakes and then converting the lithium carbonate to lithium hydroxide, and extracting lithium phosphate from spent lithium-ion batteries and then adding a phosphate anion precipitant to manufacture lithium hydroxide.

However, conventional methods of manufacturing lithium hydroxide result in various cations such as calcium and magnesium remaining in the lithium hydroxide solution. These cations act as impurities in the process of manufacturing lithium hydroxide, reducing the purity of lithium hydroxide. To remove these impurities, precipitants such as sodium hydroxide and sodium carbonate can be added to the lithium hydroxide solution, and cations such as calcium and magnesium can be precipitated and removed as hydroxides. In this regard, however, sodium ions may be mixed into the lithium mixture, reducing the purity of lithium hydroxide, and there are limitations to controlling the concentration of impurities to trace levels.

Therefore, there is a need for a method to manufacture high-purity lithium hydroxide without the mixture of sodium ions, and to control the concentration of impurities to trace levels.

### SUMMARY

With the background in mind, the present disclosure aims to manufacture high-purity lithium hydroxide by removing cation impurities from a lithium hydroxide solution containing cation impurities and lithium ions.

In addition, the present disclosure aims to control the concentration of calcium ions among impurities contained in the lithium hydroxide solution to trace levels.

An embodiment of the present disclosure may provide a method for manufacturing lithium hydroxide, the method including: a solution preparation step of preparing a lithium hydroxide solution containing impurities and lithium ions; and a lithium hydroxide solution passage step of passing the lithium hydroxide solution through a chelate resin, wherein, during the passing of the lithium hydroxide solution through the chelate resin, ions contained in the impurities are exchanged with ions bound to the chelate resin and become bound to the chelate resin, and the lithium ions pass through the chelate resin.

In the method according to an embodiment of the present disclosure, the impurities may include calcium ions (Ca²⁺), and the lithium hydroxide solution in the solution preparation step contains calcium ions at a concentration of 20 ppm to 25ppm.

In the method according to an embodiment of the present disclosure, the lithium hydroxide solution may be provided such that the amount of the lithium hydroxide solution passing through the chelate resin is 16.7 times to 83.3 times in volume ratio with respect to the amount of the chelate resin.

According to an embodiment of the present disclosure, the method may further include a binding acid solution passage step of passing a binding acid solution through the chelate resin, wherein the binding acid solution passage step is performed between the solution preparation step and the lithium hydroxide solution passage step, wherein, during the passing of the lithium hydroxide solution through the chelate resin, ions contained in the impurities exchange with hydrogen ions bound to the chelate resin.

In the method according to an embodiment of the present disclosure, the binding acid solution may have an acid concentration of 60g/L to 90g/L.

In the method according to an embodiment of the present disclosure, the binding acid solution may be provided such that the amount of the binding acid solution passing through the chelate resin is 4 times to 8 times in volume ratio with respect to the amount of the chelate resin.

According to an embodiment of the present disclosure, the method may further include a distilled water passage step of passing distilled water through the chelate resin, wherein the distilled water passage step is performed between the binding acid solution passage step and the lithium hydroxide solution passage step.

In the method according to an embodiment of the present disclosure, the distilled water may be provided such that the amount of the distilled water is 1.5 times to 6 times in volume ratio with respect to the amount of the chelate resin.

According to an embodiment of the present disclosure, the method may further include a separating acid solution passage step of passing a separating acid solution through the chelate resin bound with the impurities, wherein the separating acid solution passage step is performed after the lithium hydroxide solution passage step, wherein, during the passing of the separating acid solution through the chelate resin, impurities bound to the chelate resin exchange with hydrogen ions of the separating acid solution.

According to an embodiment of the present disclosure, the separating acid solution may have an acid concentration of 60g/L to 90g/L.

In the method according to an embodiment of the present disclosure, the separating acid solution may be provided such that the amount of the separating acid solution passing through the chelate resin is 5 times to 6.7 times in volume ratio with respect to the amount of the chelate resin.

According to the present disclosure, it is possible to manufacture high-purity lithium hydroxide by removing cation impurities from a lithium hydroxide solution containing both cation impurities and lithium ions.

Additionally, it is possible to control the concentration of calcium ions among impurities contained in the lithium hydroxide solution to trace levels.

### BRIEF DESCRIPTION OF THE DRAWINGS

FIG. 1 is a flowchart sequentially showing the method for manufacturing lithium hydroxide according to an embodiment of the present disclosure.
FIG. 2 is a graph showing the analysis results according to the ratio of the amount of lithium hydroxide solution to the amount of chelate resin.
FIG. 3 is a graph showing the analysis results according to the ratio of the amount of binding acid solution to the amount of chelate resin.
FIG. 4 is a graph showing the analysis results according to the ratio of the amount of distilled water to the amount of chelate resin.
FIG. 5 is a graph showing the analysis results according to the ratio of the amount of separating acid solution to the amount of chelate resin.

### DETAILED DESCRIPTION

Embodiments of the present disclosure are illustrated for the purpose of explaining the technical idea of the present disclosure. The scope of the rights according to the present disclosure is not limited to the embodiments presented below or the detailed descriptions of such embodiments.

Below, a description will be given of the present disclosure with reference to the drawings.

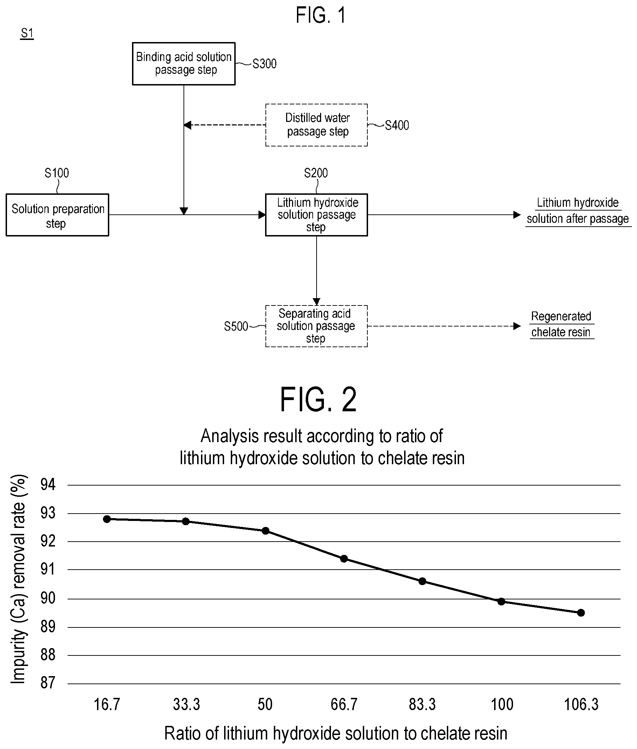

FIG. 1 is a flow chart sequentially showing the method for manufacturing lithium hydroxide according to an embodiment of the present disclosure.

Referring to FIG. 1, the method for manufacturing lithium hydroxide (S1) can produce a high-purity lithium hydroxide solution. Herein, the lithium hydroxide solution refers to a solution in which lithium hydroxide (LiOH) is dissolved, and the method for manufacturing lithium hydroxide (S1) means that lithium hydroxide is produced in an aqueous solution form. For example, the method for manufacturing lithium hydroxide (S1) may be a series of lithium hydroxide purification methods that remove cationic impurities from a lithium hydroxide solution containing cationic impurities to obtain a high-purity lithium hydroxide solution. In this case, the method for manufacturing lithium hydroxide (S1) can produce a lithium hydroxide solution from which cationic impurities have been removed.

### Solution Preparation Step (S100)

The method for manufacturing lithium hydroxide (S1) includes a solution preparation step (S100), which prepares a lithium hydroxide solution containing impurities and lithium ions. The lithium hydroxide solution may be prepared by various methods in the solution preparation step (S100). For example, the lithium hydroxide solution may be obtained from lithium-containing ores such as spodumene, lepidolite, amblygonite, or petalite. Alternatively, the lithium hydroxide solution may be obtained by oxidizing lithium carbonate using calcium hydroxide (Ca(OH)₂). Another example is that the lithium hydroxide solution may be obtained from used lithium-ion batteries. The following description focuses on preparing the lithium hydroxide solution from used lithium-ion batteries, but this is just an example, and the disclosure is not limited thereto.

In the solution preparation step (S100), the lithium hydroxide solution may be obtained using extracted lithium carbonate (Li₂CO₃) from used lithium-ion batteries. For example, lithium carbonate cake may be reacted with calcium oxide (CaO) and water at 70°C to 80°C for 2 hours to 3 hours, to obtain the lithium hydroxide solution (as per Reaction Formula 1).

Li₂CO₃(s) + CaO(s) + H₂O = 2LiOH(aq) + CaCO₃ ... (Reaction Formula 1)

In the solution preparation step (S100), the lithium hydroxide solution may contain one or more of the following cationic impurities: aluminum ion (Al³⁺), barium ion (Ba²⁺), calcium ion (Ca²⁺), iron ion (Fe²⁺, Fe³⁺), magnesium ion (Mg²⁺), and lead ion (Pb²⁺). Particularly, according to Reaction Formula 1, the lithium hydroxide solution may contain a high concentration of calcium ions, and the concentration of calcium ions in the lithium hydroxide solution may be 20ppm to 25ppm. Additionally, in the solution preparation step (S100), the lithium hydroxide solution may contain lithium ions, and the concentration of these lithium ions may be 8g/L to 12g/L.

### Lithium Hydroxide Solution Passage Step (S200)

The method for manufacturing lithium hydroxide (S1) includes a lithium hydroxide solution passage step (S200), where the lithium hydroxide solution is passed through a chelate resin so that the ions contained in the impurities are bound to the chelate resin. For example, the chelate resin can be an IDA porous type chelate resin based on a styrene matrix. The chelate resin, which is a kind of cation exchange resin, has different selectivity and adsorption properties depending on the type of ions. Generally, the selectivity of cation exchange resin for cations is greater for calcium ions than for lithium ions. Because the selectivity of the chelate resin for calcium ions is greater than for lithium ions, as the lithium hydroxide solution passes through the chelate resin, calcium ions are exchanged with hydrogen ions bound to the chelate resin, allowing lithium ions contained in the lithium hydroxide solution to pass through the resin.

During the lithium hydroxide solution passage step (S200), the lithium hydroxide solution may be provided to pass through the chelate resin. As the lithium hydroxide solution passes through the chelate resin, the ions contained in the impurities are exchanged with hydrogen ions bound to the chelate resin, and the lithium ions contained in the lithium hydroxide solution can pass through. In other words, the ions contained in the impurities of the lithium hydroxide solution are bound to the chelate resin, and the hydrogen ions bound to the chelate resin are released. For example, the ions contained in the impurities of the lithium hydroxide solution may be calcium ions, which can be exchanged with hydrogen ions bound to the chelate resin. This is true of other cations excluding lithium ions.

In the lithium hydroxide solution passage step (S200), the lithium hydroxide solution may be provided so that the ratio of the amount of lithium hydroxide solution passing through the chelate resin to the amount of chelate resin is in a range of 16.7 to 83.3. That is, the amount of the lithium hydroxide solution provided in the lithium hydroxide solution passage step (S200) may be 16.7 times to 83.3 times in volume ratio with respect to the amount of the chelate resin. For example, if the volume ratio is less than 16.7, the amount of lithium hydroxide solution passing through the chelate resin relative to the amount of chelate resin is excessively small and thus is economically unfavorable. If the volume ratio exceeds 83.3, impurities may not be sufficiently removed from the lithium hydroxide solution. Herein, to distinguish from the lithium hydroxide solution containing impurities prepared in the solution preparation step (S100), the lithium hydroxide solution from which impurities have been removed by the chelate resin is named the post-passage lithium hydroxide solution.

### Binding Acid Solution Passage Step (S300)

The method for manufacturing lithium hydroxide (S1) may include a binding acid solution passage step (S300), which allows the passage of a binding acid solution through the chelate resin so that hydrogen ions(H⁺) are bound to the chelate resin. The binding acid solution passage step (S300) may be performed between the solution preparation step (S100) and the lithium hydroxide solution passage step (S200). During the binding acid solution passage step (S300), ions originally bound to the chelate resin may be exchanged with hydrogen ions in the binding acid solution as it passes through the chelate resin. For example, if the ions originally bound to the chelate resin are sodium ions (Na⁺), hydrogen ions in the binding acid solution may undergo ion exchange with the sodium ions originally bound to the chelate resin and become bound to the resin as the binding acid solution passes through the resin. However, this is just an illustrative example, and the ions originally bound to the chelate resin could also be hydrogen ions. In this regard, during the binding acid solution passage step (S300), the binding acid solution passing through the chelate resin could remove the coating layer on the surface of the chelate resin. Additionally, the binding acid solution may be at least one solution of hydrochloric acid (HCl) and sulfuric acid (H₂SO₄). The concentration of the acid in the binding acid solution may be 60g/L to 90g/L.

In the binding acid solution passage step (S300), the binding acid solution may be provided so that the ratio of the amount of the binding acid solution passing through the chelate resin to the amount of chelate resin may be 4 to 8. That is, the amount of the binding acid solution provided in the binding acid solution passage step (S300) may be 4 times to 8 times in volume ratio with respect to the amount of the chelate resin. For example, if the volume ratio is less than 4, there might not be enough hydrogen ions sufficiently binding to the chelate resin, and if the volume ratio exceeds 8, no further hydrogen ions would bind to the chelate resin, which is economically unfavorable.

### Distilled Water Passage Step (S400)

The method for manufacturing lithium hydroxide (S1) may include a distilled water passage step (S400) of passing distilled water through the chelate resin to remove the binding acid solution remaining on the chelate resin after the binding acid solution passage step (S300). The distilled water passage step (S400) may be performed between the binding acid solution passage step (S300) and the lithium hydroxide solution passage step (S200). Herein, the remaining binding acid solution on the chelate resin refers to the binding acid solution that does not undergo ion exchange while passing through the chelate resin and remains on the surface of the chelate resin. For instance, if the binding acid solution remaining on the chelate resin without binding mixes with the lithium hydroxide solution during the lithium hydroxide solution passage step (S200), sulfur (S) or chlorine (Cl) could act as impurities, contaminating the process solution in subsequent processes. In such cases, passing distilled water through the chelate resin to wash and remove the remaining binding acid solution can prevent sulfur or chlorine from being mixed into the lithium hydroxide solution that has passed through the chelate resin.

In the distilled water passage step (S400), the amount of distilled water may be provided so that the ratio of the amount of distilled water to the amount of chelate resin is 1.5 to 6. That is, the amount of distilled water provided in the distilled water passage step (S400) may be 1.5 times to 6 times in volume ratio with respect to the amount of chelate resin. For example, if the volume ratio is less than 1.5, the remaining binding acid solution may not be sufficiently removed. If the volume ratio exceeds 6, the amount of distilled water becomes excessively large, which is economically unfavorable.

### Separating Acid Solution Passage Step (S500)

The method for manufacturing lithium hydroxide (S1) may include a separating acid solution passage step (S500) of passing a separating acid solution through the chelate resin bound with impurities to detach the impurities from the chelate resin. The separating acid solution passage step (S500) may be performed after the lithium hydroxide solution passage step (S200). This step is intended to detach the impurities bound to the chelate resin during the lithium hydroxide solution passage step (S200) from the chelate resin to allow for the reuse of the chelate resin. While the separating acid solution passes through the chelate resin bound with impurities, the impurity ions bound to the chelate resin may exchange with the hydrogen ions of the separating acid solution. That is, the hydrogen ions of the separating acid solution bind to the chelate resin, and the calcium ions bound to the chelate resin are detached therefrom. For example, the separating acid solution may be sulfuric acid (H₂SO₄) or hydrochloric acid (HCl). The concentration of the acid in the separating acid solution may be 60 g/L to 90 g/L.

In the separating acid solution passage step (S500), the amount of the separating acid solution may be provided so that the ratio of the separating acid solution passing through the chelate resin to chelate resin is 5 to 6.7. That is, the amount of the separating acid solution provided in the separating acid solution passage step (S500) may be 5 times to 6.7 times in volume ratio with respect to the amount of chelate resin. For example, if the volume ratio is less than 5, the impurity ions may not be sufficiently detached from the chelate resin. If the volume ratio exceeds 6.7, the amount of the separating acid solution becomes excessively large and thus is economically unfavorable.

Below, embodiments of the method for manufacturing lithium hydroxide according to the present disclosure will be explained.

### Analysis Results Based on Ratio of Lithium Hydroxide Solution Amount to Chelate Resin Amount

**TABLE 1**

| | | | Ex. 1 | Ex. 2 | Ex. 3 | Ex. 4 | Ex. 5 | Ex. 6 | Ex. 7 |
|---|---|---|---|---|---|---|---|---|---|
| LiOH Sol'n amount (mL) | | | 1000 | 2000 | 3000 | 4000 | 5000 | 6000 | 7000 |
| Chelate resin amount (mL) | | | 60 | 60 | 60 | 60 | 60 | 60 | 60 |
| Ratio of LiOH Sol'n to Chelate Resin | | | 16.7 | 33.3 | 50 | 66.7 | 83.3 | 100 | 106.3 |
| Pre-Rxn | Li | g/L | 11.2 | 11.2 | 11.2 | 11.2 | 11.2 | 11.2 | 11.2 |
| | Ca | mg/L | 22.0 | 22.0 | 22.0 | 22.0 | 22.0 | 22.0 | 22.0 |
| Post-Rxn | Li | g/L | 9.17 | 10.1 | 10.1 | 10.2 | 10.6 | 11.1 | 11.2 |
| | Ca | mg/L | 1.58 | 1.61 | 1.67 | 1.89 | 2.07 | 2.22 | 2.31 |
| Impurity Removal Rate | Li | % | 19.8 | 15.0 | 13.4 | 12.4 | 11.1 | 9.40 | 8.86 |
| | Ca | % | 92.8 | 92.7 | 92.4 | 91.4 | 90.6 | 89.9 | 89.5 |

In Table 1, Examples 1 to 7 were conducted under the same experimental conditions with varying amounts of lithium hydroxide solution. That is, the experiments in Table 1 varied the ratio of the amount of lithium hydroxide solution passing through the chelate resin to the amount of chelate resin. As can be seen from Table 1 and FIG. 2, when the ratio of the amount of lithium hydroxide solution to the amount of chelate resin was between 16.7 and 83.3 (Examples 1 to 5), impurities were sufficiently removed, indicating that the removal rate of calcium ions after the reaction was between 90.6% and 92.8%. Therefore, when the ratio of the amount of lithium hydroxide solution to the amount of chelate resin is at least 16.7, as in Example 1, the amount of lithium hydroxide solution passing through the chelate resin can be prevented from being excessively low. When the ratio of the amount of lithium hydroxide solution to the amount of chelate resin is up to 83.3, as in Example 5, impurities from the lithium hydroxide solution are sufficiently removed (removal rate of 90% or more), with a significant effect brought about.

### Analysis Results Based on the Ratio of Acid Solution Amount for Binding to Chelate Resin Amount

**TABLE 2**

| | Ex. 8 | Ex. 9 | Ex. 10 | Ex. 11 | Ex. 12 |
|---|---|---|---|---|---|
| Sulfuric acid amount (mL) | 100 | 200 | 300 | 400 | 500 |
| Chelate resin amount (mL) | 50 | 50 | 50 | 50 | 50 |
| Ratio of sulfuric acid to chelate resin | 2 | 4 | 6 | 8 | 10 |
| Conc. of sulfuric acid solution after reaction (g/L) | 21.7 | 52.7 | 59.2 | 59.5 | 59.3 |

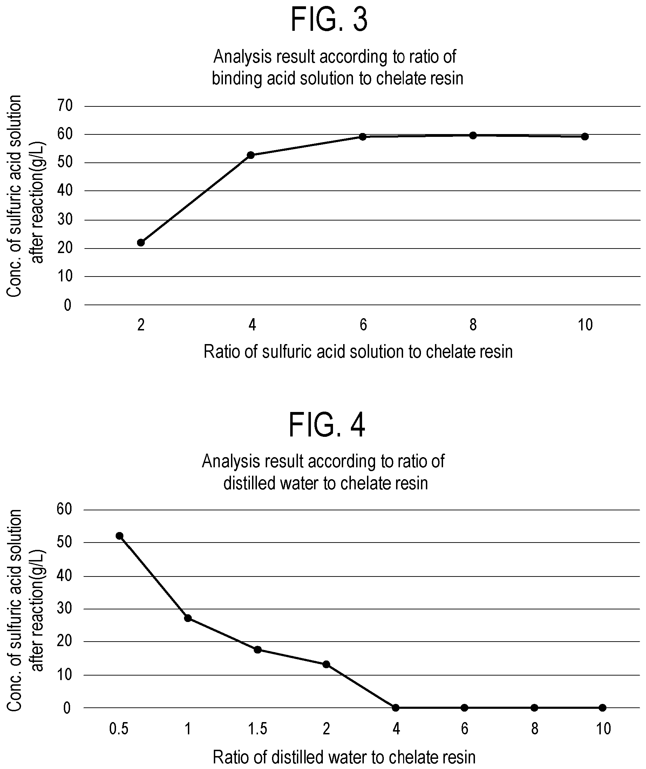

In Table 2, Examples 8 to 12 were conducted under the same experimental conditions with varying amounts of the binding acid solution. That is, the experiments in Table 2 varied the ratio of the amount of the binding acid solution passing through the chelate resin to the amount of chelate resin. In these Examples, a sulfuric acid solution with a concentration of 60g/L was used as the binding acid solution. As can be seen from Table 2 and FIG. 3, when the ratio of the amount of sulfuric acid solution to the amount of chelate resin is between 4 and 8 (Examples 9 to 11), the sulfuric acid solution reacts sufficiently, indicating that the concentration of sulfuric acid solution after the reaction becomes between 52.7g/L and 59.5g/L. Therefore, when the ratio of the amount of sulfuric acid solution to the amount of chelate resin is at least 4, as in Example 9, it results in a significant effect on the binding rate of hydrogen ions. When the ratio of the amount of sulfuric acid solution to the amount of chelate resin is up to 8, as in Example 11, the amount of sulfuric acid solution is prevented from becoming excessively large while maintaining the binding rate of hydrogen ions at a certain level.

### Analysis Results Based on Ratio of Distilled Water Amount to Chelate Resin Amount

**TABLE 3**

| | Ex. 13 | Ex. 14 | Ex. 15 | Ex. 16 | Ex. 17 | Ex. 18 | Ex. 19 | Ex. 20 |
|---|---|---|---|---|---|---|---|---|
| Distilled water amount (mL) | 25 | 50 | 75 | 100 | 200 | 300 | 400 | 500 |
| Chelate resin amount (mL) | 50 | 50 | 50 | 50 | 50 | 50 | 50 | 50 |
| Ratio of distilled water acid to chelate resin | 0.5 | 1.0 | 1.5 | 2 | 4 | 6 | 8 | 10 |
| Conc. of sulfuric acid solution after reaction (g/L) | 52.1 | 27.4 | 17.7 | 13.4 | 0.08 | 0.07 | 0.05 | 0.04 |

In Table 3, Examples 13 to 20 were conducted under the same experimental conditions with varying amounts of distilled water. That is, the experiments in Table 3 varied the ratio of the amount of distilled water passing through the chelate resin to the amount of chelate resin. As can be seen from Table 3 and FIG. 4, when the ratio of the amount of distilled water to the amount of chelate resin is between 1.5 and 6 (Examples 15 to 18), the sulfuric acid solution was sufficiently removed, indicating that the concentration of sulfuric acid solution after the reaction becomes between 17.7g/L and 0.07g/L. Therefore, when the ratio of the amount of distilled water to the amount of chelate resin is at least 1.5, as in Example 15, it results in a significant effect on the removal of the remaining binding acid solution. When the ratio of the amount of distilled water to the amount of chelate resin is up to 6, as in Example 18, the amount of distilled water can be prevented from becoming excessively large while maintaining the removal rate of the remaining binding acid solution at a certain level.

### Analysis Results Based on Ratio of Separating Acid Solution Amount to Chelate Resin Amount

**TABLE 4**

| | Ex. 21 | Ex. 22 | Ex. 23 | Ex. 24 | Ex. 25 |
|---|---|---|---|---|---|
| Sulfuric acid amount (mL) | 100 | 200 | 300 | 400 | 500 |
| Chelate resin amount (mL) | 60 | 60 | 60 | 60 | 60 |
| Ratio of separating acid solution to chelate resin | 1.6 | 3.3 | 5 | 6.7 | 8.3 |
| Ca ion conc. in chelate resin before reaction (mg/L) | 2,633 | 1,850 | 597 | 314 | 306 |
| Ca ion conc. in chelate resin after reaction (mg/L) | 468 | 756 | 170 | 9.71 | 3.42 |
| Cumulative recovery rate of Ca ions (%) | 29.6 | 77.4 | 88.2 | 88.8 | 89.1 |

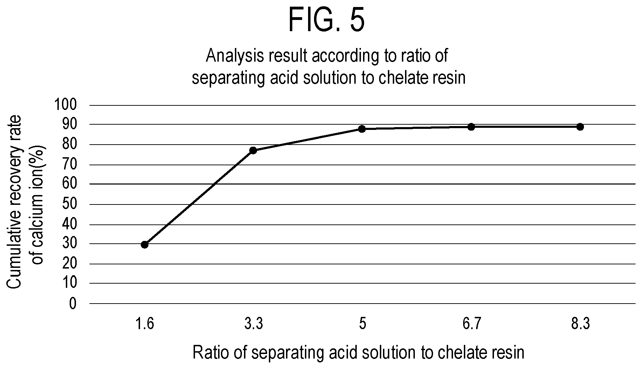

In Table 4, Examples 21 to 25 were conducted under the same experimental conditions with varying amounts of separating acid solution. That is, the experiments in Table 4 varied the ratio of the amount of separating acid solution passing through the chelate resin to the amount of chelate resin. In these Examples, a sulfuric acid solution with a concentration of 90g/L was used as the separating acid solution. As can be seen from Table 4 and FIG. 5, when the ratio of the amount of sulfuric acid solution to the amount of chelate resin is between 5 and 6.7 (Examples 23 to 24), indicating that calcium ions were sufficiently detached from the chelate resin, resulting in a cumulative recovery rate of calcium ions between 88.2% and 88.8%. Therefore, when the ratio of the amount of separating acid solution to the amount of chelate resin is at least 5, as in Example 23, it results in a significant effect on the sufficient detach of impurities from the chelate resin. When the ratio of the amount of separating acid solution to the amount of chelate resin is up to 6.7, as in Example 24, the amount of sulfuric acid solution can be prevented from becoming excessively large while maintaining the desorption rate of impurities at a certain level.

The exemplary embodiments of the present disclosure have been described with reference to the accompanying drawings, but those skilled in the art will understand that the present disclosure may be implemented in another specific form without changing the technical scope or an essential feature thereof.

Accordingly, it will be understood that the aforementioned exemplary embodiments are described for illustration in all aspects and are not limited, and it should be interpreted that the scope of the present disclosure shall be represented by the claims to be described below, and all of the changes or modified forms induced from the meaning and the scope of the claims, and an equivalent concept thereof are included in the scope of the present disclosure.

## Claims

1. A method for manufacturing lithium hydroxide, the method comprising:
a solution preparation step of preparing a lithium hydroxide solution containing impurities and lithium ions; and
a lithium hydroxide solution passage step of passing the lithium hydroxide solution through a chelate resin,
wherein, during the passing of the lithium hydroxide solution through the chelate resin, ions contained in the impurities are exchanged with ions bound to the chelate resin and become bound to the chelate resin, and the lithium ions pass through the chelate resin.

2. The method of claim 1, wherein
the impurities comprise calcium ions (Ca²⁺), and
the lithium hydroxide solution in the solution preparation step contains calcium ions at a concentration of 20 ppm to 25ppm.

3. The method of claim 1, wherein the lithium hydroxide solution is provided such that the amount of the lithium hydroxide solution passing through the chelate resin is 16.7 times to 83.3 times in volume ratio with respect to the amount of the chelate resin.

4. The method of claim 1, further comprising a binding acid solution passage step of passing a binding acid solution through the chelate resin, wherein the binding acid solution passage step is performed between the solution preparation step and the lithium hydroxide solution passage step,
wherein, during the passing of the lithium hydroxide solution through the chelate resin, ions contained in the impurities exchange with hydrogen ions bound to the chelate resin.

5. The method of claim 4, wherein the binding acid solution has an acid concentration of 60g/L to 90g/L.

6. The method of claim 4, wherein the binding acid solution is provided such that the amount of the binding acid solution passing through the chelate resin is 4 times to 8 times in volume ratio with respect to the amount of the chelate resin.

7. The method of claim 4, further comprising a distilled water passage step of passing distilled water through the chelate resin,
wherein the distilled water passage step is performed between the binding acid solution passage step and the lithium hydroxide solution passage step.

8. The method of claim 7, wherein the distilled water is provided such that the amount of the distilled water is 1.5 times to 6 times in volume ratio with respect to the amount of the chelate resin.

9. The method of claim 1, further comprising a separating acid solution passage step of passing a separating acid solution through the chelate resin bound with the impurities, wherein the separating acid solution passage step is performed after the lithium hydroxide solution passage step,
wherein, during the passing of the separating acid solution through the chelate resin, impurities bound to the chelate resin exchange with hydrogen ions of the separating acid solution.

10. The method of claim 9, wherein the separating acid solution has an acid concentration of 60g/L to 90g/L.

11. The method of claim 9, wherein the separating acid solution is provided such that the amount of the separating acid solution passing through the chelate resin is 5 times to 6.7 times in volume ratio with respect to the amount of the chelate resin.
